(19) Europäisches Patentamt
European Patent Office
Office européen des brevets

(11) Numéro de publication : **0 385 819 B1**

# FASCICULE DE BREVET EUROPEEN

(12)

(45) Date de publication du fascicule du brevet :
**21.10.92 Bulletin 92/43**

(51) Int. Cl.⁵ : **A01C 7/04**

(21) Numéro de dépôt : **90400258.1**

(22) Date de dépôt : **30.01.90**

(54) **Dispositif distributeur pour semoir monograine.**

(30) Priorité : **01.03.89 FR 8902674**

(43) Date de publication de la demande :
**05.09.90 Bulletin 90/36**

(45) Mention de la délivrance du brevet :
**21.10.92 Bulletin 92/43**

(84) Etats contractants désignés :
**DE ES FR IT**

(56) Documents cités :
**FR-A- 2 135 702**
**GB-A- 650 591**
**US-A- 4 074 830**

(73) Titulaire : **ATELIERS RIBOULEAU**
**F-79240 Largeasse (FR)**

(72) Inventeur : **Ribouleau, Michel**
**4, Avenue Paul-Deroulède**
**F-75015 Paris (FR)**

(74) Mandataire : **Polus, Camille et al**
**c/o Cabinet Lavoix 2, Place d'Estienne d'Orves**
**F-75441 Paris Cedex 09 (FR)**

Jouve, 18, rue Saint-Denis, 75001 PARIS

## Description

Les dispositifs distributeurs pour semoir monograine comportent de manière habituelle un carter ayant une partie de forme générale circulaire qui est divisée en une chambre de graines et une chambre de dépression par un disque rotatif muni de perforations d'orifices espacés circonférentiellement, et un canal d'alimentation reliant la chambre de graines à une trémie de réserve placée au-dessus de lui. Un tel dispositif est décrit dans le document US-A-4074830.

L'alimentation du dispositif distributeur s'effectue ainsi de manière extrêmement simple, les graines passant de la trémie à la chambre de graines par simple gravité. Toutefois il est indispensable, pour éviter les pertes inutiles de graines et assurer au semis sa régularité, que la trémie et le canal d'alimentation soient rigoureusement dans le prolongement l'un de l'autre et en contact étanche. Or les surfaces rectilignes de jonction de ces deux organes sont délicates à usiner tandis que leur montage exige une manoeuvre parfaitement orientée pour éviter tout risque de coincement.

La présente invention a pour but de supprimer ces problèmes en fournissant un dispositif distributeur dans lequel les faces de jonction du canal d'alimentation et de la trémie se positionnent pratiquement automatiquement, sans exiger d'usinage particulier.

Cette invention a en effet pour objet un dispositif distributeur pour semoir monograine comportant un carter divisé par un disque rotatif en une chambre de graines et une chambre de dépression, et un canal d'alimentation qui débouche à la partie inférieure de la chambre de graines et est prolongé à sa partie supérieure par une trémie de réserve de graines, dans lequel l'extrémité supérieure du canal d'alimentation et l'extrémité inférieure de la trémie ont des formes arquées complémentaires.

Selon un mode préféré de réalisation, le bord supérieur du canal d'alimentation et le bord inférieur de la trémie forment des arcs de cercle centrés sur l'axe du disque rotatif.

Grâce à cette disposition le canal d'alimentation et la trémie se positionnent automatiquement l'un par rapport à l'autre dès que l'on met en place le carter sur l'axe central du distributeur.

De préférence la chambre de graines et le canal d'alimentation sont formés dans un couvercle du carter et celui-ci peut ainsi être démonté et remis en place aussi souvent que cela est nécessaire, sans crainte de détérioration du fonctionnement du distributeur.

La description ci-dessous de modes de réalisation, donnés à titre d'exemple non limitatif et représentés aux dessins annexés, fera d'ailleurs ressortir les avantages et caractéristiques de l'invention. Sur ces dessins :

La figure 1 est une vue en perspective éclatée d'un distributeur de semoir monograine selon l'invention.

La figure 2 est une vue en coupe verticale du distributeur de la Fig.1 en position d'utilisation.

La figure 3 est une vue analogue à la Fig.2 d'une variante de réalisation.

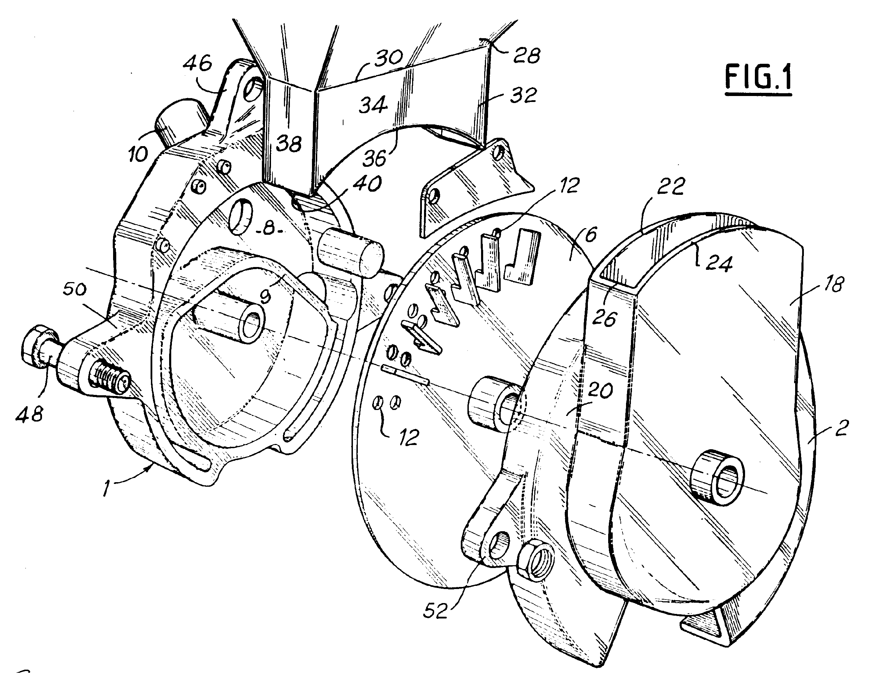

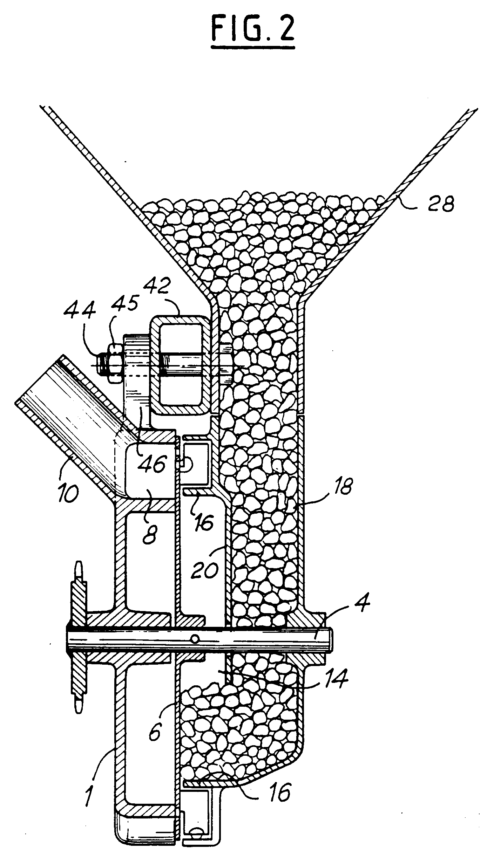

Le dispositif distributeur représenté sur les Fig.1 et 2 comporte un carter, de forme générale cylindrique, constitué par un boîtier 1 et un couvercle 2 qui sont traversés par un même axe 4 mais sont séparés l'un de l'autre par un disque rotatif 6 porté par cet axe.

A l'intérieur du boîtier 1 une chambre de dépression 8, délimitée par une cloison 9, est reliée par un conduit 10 à une source de dépression appropriée (non représentée). Le disque 6 ferme cette chambre 8 et comporte au moins une rangée de perforations 12, espacées circonférentiellement, qui sont ainsi en communication avec la source de dépression pendant une partie de leur rotation autour de l'axe 4.

Par sa face opposée, le disque 6 ferme une chambre de graines 14 ménagée dans le couvercle 2. Une cloison 16, sensiblement parallèle à la paroi latérale du couvercle, isole cette chambre de la majeure partie de la périphérie du disque 6, c'est-à-dire de la majeure partie des perforations 12 de ce disque. Seules un certain nombre de perforations, qui ont un mouvement ascendant lors de la rotation du disque 6, sont ainsi en contact avec les graines contenues dans la chambre 14, ce qui leur permet de prélever ces graines sous l'effet de la dépression transmise à travers elles.

De la chambre de graines 14 part un canal d'alimentation 18 qui se dirige vers le haut et se prolonge au-delà du couvercle 2. Le canal d'alimentation 18 a une section droite sensiblement rectangulaire dont les grandes faces sont parallèles au fond 20 du couvercle ou même partiellement constituées par ce dernier. A leur partie supérieure chacune de ces grandes faces est incurvée. Le bord supérieur du canal d'alimentation forme ainsi deux arcs de cercle respectivement 22 et 24 qui sont reliés par deux portions rectilignes 26. De préférence les bords incurvés 22 et 24 sont centrés sur l'axe 4 de support du distributeur tandis que les bords rectilignes 26 sont parallèles à cet axe c'est-à-dire horizontaux.

Le canal d'alimentation 18 est alimenté à partir d'une trémie de réserve 28 qui a la forme d'un tronc de pyramide renversé. La partie inférieure ou petite base 30 de cette pyramide a une forme rectangulaire analogue à la section droite du canal d'alimentation 18. Cette base est prolongée par un conduit 32 dont les deux grandes faces 34 sont terminées par un bord inférieur incurvé 36 dont la concavité est tournée vers le bas. Les petits côtés 38 sont terminés par des bords rectilignes horizontaux 40.

Les bords inférieurs 36 du conduit 32 ont des rayons de courbure semblables à ceux des bords supérieurs 22 et 24 du canal d'alimentation 18. Ainsi les bords inférieurs de la trémie 28 et les bords supérieurs du canal d'alimentation 18 ont des formes complémentaires et peuvent être emboîtés de manière étanche les uns sur les autres.

La trémie 28 est montée sur le semoir, par exemple sur une barre de support 42 (Fig.2) par l'intermédiaire d'un organe de fixation tel qu'un boulon 44 et son écrou 45. Le boîtier peut également être monté sur la barre de support 42 grâce à une patte de fixation 46 percée d'un trou de passage du boulon 44. Le boîtier 1 et le couvercle 2 sont également assemblés l'un à l'autre au moyen de boulons 48 traversant successivement une patte de fixation 50 du boîtier et une patte de fixation 52 du couvercle.

Lors de l'assemblage du distributeur le boîtier 1 muni de l'axe 4 et du disque rotatif 6 est monté sur la barre de support 42 puis le couvercle est enfilé sur l'axe 4. Lors de cette translation le long de l'axe 4, le canal d'alimentation 18 vient automatiquement s'emboîter sous le conduit évidé 32 de la trémie 28. Tout défaut d'alignement angulaire est facilement corrigé par un léger pivotement du couvercle sur l'axe 4 c'est-à-dire un déplacement relatif des arcs de cercle 22 et 24 par rapport aux arcs de cercle 36. Ces arcs ayant sensiblement le même rayon de courbure, ce déplacement s'effectue facilement et aucun risque de coincement n'est à craindre. L'alignement vertical s'établit automatiquement lors du serrage des boulons 48.

Il est clair que le couvercle 2 peut être démonté également par un simple déplacement en translation le long de l'axe 4, sans risque de détérioration de la trémie ni de la jonction entre ces deux organes. Des opérations de maintenance ou autres peuvent donc être effectuées aussi souvent que cela est nécessaire.

Par ailleurs on obtient à la jonction entre le canal d'alimentation et la trémie une étanchéité réelle tandis que l'usinage des bords arqués ne pose aucun problème.

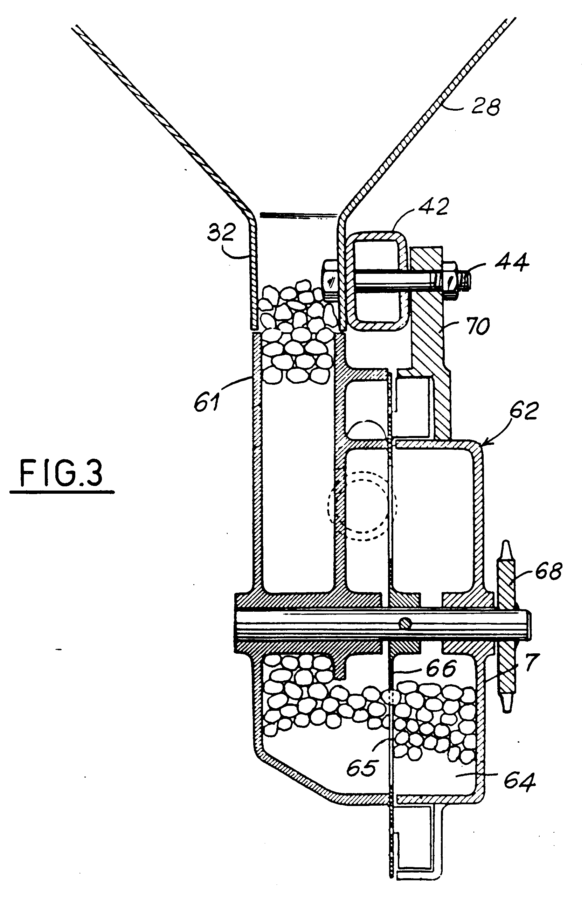

Selon une variante de réalisation représentée sur la Fig.3, le dispositif distributeur comporte un canal d'alimentation 58 formé sur le boîtier 61. Ce canal, qui a une forme analogue à celle du canal 18, est en communication à sa partie inférieure avec la chambre de graines 64 du couvercle 2 grâce à un orifice 65 du disque rotatif 66. A sa partie supérieure le canal d'alimentation 58 comporte, de la même manière que le canal 18, des bords supérieurs en arcs de cercle 22, 24 qui ont une forme exactement complémentaire de celle des bords arqués 36 du conduit 32 de la trémie de réserve de graines 28.

Le boîtier 61 constitue alors, de préférence, l'élément démontable du distributeur. Il tourillonne sur l'arbre 4 du côté du disque 66 opposé au pignon 68 d'entraînement de cet arbre. Le couvercle 62 tourillonne lui sur l'arbre 4 entre le pignon 68 et le disque 66 et est muni d'une patte de fixation 70 qui est traversée par la vis 44 de fixation de la trémie 18 sur la barre de support 42.

La mise en place du distributeur de même que son démontage est ainsi considérablement simplifié tandis que l'étanchéité entre le canal d'alimentation 58 et la trémie 28, 32 est assurée, de la même manière que dans le mode de réalisation des Fig.1 et 2.

**Revendications**

1. Dispositif distributeur pour semoir mono-graine comportant un carter ayant une partie de forme générale circulaire divisée en une chambre de graines (14, 64) et une chambre de dépression (8) par un disque rotatif (6, 66) muni de perforations (12) espacées circonférentiellement et un canal d'alimentation (18, 58) reliant la chambre de graines à une trémie de réserve (28), caractérisé en ce que l'extrémité supérieure (22, 24) du canal d'alimentation (18) et l'extrémité inférieure (36) de la trémie (28) ont des formes arquées complémentaires.

2. Dispositif distributeur suivant la revendication 1, caractérisé en ce que l'extrémité supérieure du canal d'alimentation et l'extrémité inférieure de la trémie sont centrées sur l'axe (4) du disque rotatif (6, 66).

3. Dispositif distributeur suivant l'une des revendications 1 et 2, caractérisé en ce que le canal d'alimentation a une section horizontale rectangulaire et comporte deux grandes faces planes dont le bord supérieur (22, 24) forme un arc de cercle.

4. Dispositif distributeur suivant la revendication 3, caractérisé en ce que la trémie (28) est prolongée à sa partie inférieure par un conduit (32) de section rectangulaire dont les deux grandes faces ont un bord inférieur concave en arc de cercle (36).

5. Dispositif distributeur suivant l'une des revendications précédentes, caractérisé en ce que le carter étant constitué par un boîtier (1) et un couvercle (2) de part et d'autre du disque rotatif (6), le canal d'alimentation (18) est solidaire du couvercle (2) et se prolonge à la partie supérieure de ce dernier.

6. Dispositif distributeur suivant l'une des revendications 1 à 4, caractérisé en ce que le carter comportant un boîtier (61) et un couvercle (62) de part et d'autre du disque rotatif (66), le canal d'alimentation (58) est porté par le boîtier et se prolonge à la partie supérieure de celui-ci.

7. Dispositif distributeur suivant l'une des revendications précédentes, caractérisé en ce que la trémie (28) est fixée sur une barre de support (42) du semoir par l'intermédiaire d'organes de fixation traversant la paroi du conduit (32).

## Patentansprüche

1. Eine Verteilervorrichtung für eine Einzelkörnersämaschine mit einem Gehäuse mit einem weitgehend kreisförmigen Teil, der durch eine rotierende Scheibe (6, 66), die verteilt auf ihrem Umfang Perforationen (12) aufweist, in eine Körnerkammer (14, 16) und eine Unterdruckkammer (8) unterteilt ist, und mit einem Beschickungskanal (18, 58), der die Körnerkammer mit einem Vorratsbehälter (28) verbindet, **dadurch gekennzeichnet, daß** das obere Ende (22, 24) des Beschickungskanals (18) und das untere Ende (36) des Vorratsbehälters (28) komplementäre gekrümmte Formen aufweisen.

2. Eine Verteilervorrichtung nach Anspruch 1, **dadurch gekennzeichnet, daß** das obere Ende des Beschickungskanals und das untere Ende des Vorratsbehälters auf der Welle (4) der rotierenden Scheibe (6, 66) zentriert sind.

3. Eine Verteilervorrichtung nach einem der Ansprüche 1 oder 2, **dadurch gekennzeichnet, daß** der Beschickungskanal einen horizontalen rechteckigen Querschnitt und zwei große ebene Flächen aufweist, deren obere Kanten (22, 24) einen Kreisbogen bilden.

4. Eine Verteilervorrichtung nach Anspruch 3, **dadurch gekennzeichnet, daß** der Vorratsbehälter (28) an seinem unteren Teil durch eine Rohrleitung (32) mit rechteckigem Querschnitt verlängert wird, dessen zwei große Flächen eine konkave untere kreisbogenförmige Kante (36) haben.

5. Eine Verteilervorrichtung nach einem der vorausgegangenen Ansprüche, **dadurch gekennzeichnet, daß** das Gehäuse aus einem Kasten (1) und einem Deckel (2) auf beiden Seiten der rotierenden Scheibe (6) besteht, und daß der Beschickungskanal (18) fest mit dem Deckel (2) verbunden ist und sich am oberen Teil dieses Deckels erstreckt.

6. Eine Verteilervorrichtung nach einem der Ansprüche 1 bis 4, **dadurch gekennzeichnet, daß**

in dem Gehäuse, das einen Kasten (61) und einen Deckel (62) auf beiden Seiten der rotierenden Scheibe (66) aufweist, der Beschickungskanal (58) von dem Kasten getragen wird und sich am oberen Teil desselben erstreckt.

7. Eine Verteilervorrichtung nach einem der vorausgegangen Ansprüche, **dadurch gekennzeichnet, daß** der Vorratsbehälter (28) auf einer Haltestange (42) des Vorratsbehälters mittels Befestigungselementen befestigt ist, die die Wand des Rohres (32) durchqueren.

## Claims

1. A distributor device for a single seed drill comprising a casing having a general circular shape divided into a grain chamber (14, 64) and a low pressure chamber (8) by a rotary disc (6, 66) provided with circumferentially interspaced perforations (12) and a feed duct (18, 58) connecting the grain chamber to a supply hopper (28), characterized in that the upper end (22, 24) of the feed duct (18) and the lower end (38) of the hopper (28) have arcuate complementary shapes.

2. A distributor device according to claim 1, characterized in that the upper end of the feed duct and the lower end of the hopper are centred on the axis (4) of the rotary disc (6, 66).

3. A distributor device according to one of claims 1 and 2, characterized in that the feed duct has a horizontal rectangular cross-section and includes two large flat sides whose upper edge (22, 24) forms a circular arc.

4. A distributor device according to claim 3, characterized in that the hopper (28) is extended in its lower portion in a duct (32) with a rectangular cross-section whose two large sides have a lower concave circular arc-shaped edge (36).

5. A distributor device according to one of the preceding claims, characterized in that, the casing being constituted by a box (1) and a cover (2) on either side of the rotary disc (6), the feed duct (18) is joined to the cover (2) and is extended in the upper portion of the latter.

6. A distributor device according to one of claims 1 to 4, characterized in that, the casing comprising a box (61) and a cover (62) on either side of the rotary disc (66), the feed duct (58) is carried by the box and is extended in the upper portion of the latter.

7. A distributor device according to one of the preceding claims, characterised in that the hopper (28) is fixed on a supporting bar (42) of the seed drill by means of fixing elements passing through the wall of the duct (32).

FIG.1

EP 0 385 819 B1

# FIG. 2

FIG.3